# EUROPEAN PATENT APPLICATION

(11) **EP 2 141 438 A1**
(43) Date of publication of application: **06.01.2010**
(21) Application number: 09162407.2
(22) Date of filing: 10.06.2009
(51) Int. Cl.: F41A 17/08, F41G 3/04, F41G 3/14

(54) **Close-air-support assistant**

(30) Priority: 13.06.2008 US 139350
(71) Applicant: Honeywell International Inc., Morristown, NJ 07962 (US)
(72) Inventor: Cornett, Alan, Morristown, NJ 07692-2245 (US); Becker, Robert Charles, Morristown, NJ 07962-2245 (US); Demers, Robert E., Morristown, NJ 07692-2245 (US)
(74) Representative: Buckley, Guy Julian

(57) **Abstract**

A system (24) includes a signal interface (74) configured to receive first data from at least one onboard system of at least one aircraft, a display (70), and a processing device (60). The processing device is configured to render to the display a graphical representation of a target location, determine from the first data and render to the display a graphical illustration of a position of the at least one aircraft, and determine, from information describing munitions carried by the at least one aircraft, and render to the display a graphical illustration of a blast radius associated with munitions deliverable by the at least one aircraft to the target location.

## Description

### BACKGROUND OF THE INVENTION

Maintaining awareness of multiple aircraft with multiple weapons types in a dynamic environment while under combat stress can lead to excessive workload and increased chance of errors, including fratricide. The current approach to the problem is to use either mental imagery or pencil-and-paper sketches. Weapons payload information is gathered from paper documents and verified in real-time by voice communications.

More specifically, Joint Terminal Attack Controllers (JTAC) use means of mental visualization, as well as pencil and paper to track close air support aircraft. Additionally, JTACs use experience and a material reference to estimate or otherwise determine damage effects from a given weapon system associated with the aircraft. Terminal Control Operations, a type of air control, becomes difficult if multiple aircraft are present and further difficult if the JTAC is mobile. Moreover, no real-time automated electronic means are provided to ground personnel for aircraft position information, as well as weapon payload available. Such may only exist in the written Air Tasking Order (ATO). Because aircraft vectors must be determined visually, multiple dry runs may be required for safety reasons.

### SUMMARY OF THE INVENTION

In an embodiment, a system includes a signal interface configured to receive first data from at least one onboard system of at least one aircraft, a display, and a processing device. The processing device is configured to render to the display a graphical representation of a target location, determine from the first data and render to the display a graphical illustration of a position of the at least one aircraft, and determine, from information describing munitions carried by the at least one aircraft, and render to the display a graphical illustration of a blast radius associated with munitions deliverable by the at least one aircraft to the target location.

### BRIEF DESCRIPTION OF THE DRAWING

Preferred and alternative embodiments of the present invention are described in detail below with reference to the following drawings.

FIG. 1 is a block diagram of a client device according to an embodiment of the present invention;

FIG. 2 is a schematic illustration of an operational environment for the client device illustrated in FIG. 1;

FIG. 3 is a schematic depiction of a first rendering provided by the client device according to an embodiment of the present invention; and

FIG. 4 is a schematic depiction of a second rendering provided by the client device according to an embodiment of the present invention.

### DETAILED DESCRIPTION OF THE PREFERRED EMBODIMENT

The invention may be described in the general context of computer-executable instructions, such as program modules, executed by one or more computers or other devices. Generally, program modules include routines, programs, objects, components, data structures, etc. that perform particular tasks or implement particular abstract data types. Typically the functionality of the program modules may be combined or distributed as desired in various embodiments.

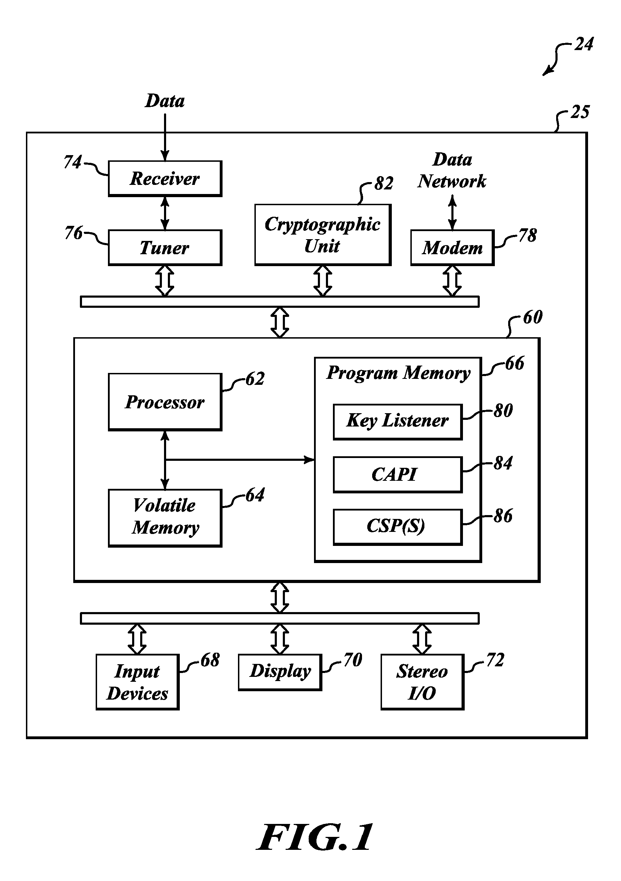

Figure 1 illustrates an example of a suitable operating environment in which the invention may be implemented. The operating environment is only one example of a suitable operating environment and is not intended to suggest any limitation as to the scope of use or functionality of the invention. Other well known computing systems, environments, and/or configurations that may be suitable for use with the invention include, but are not limited to, personal computers, server computers, hand-held or laptop devices, multiprocessor systems, microprocessor-based systems, programmable consumer electronics, network PCs, minicomputers, mainframe computers, distributed computing environments that include any of the above systems or devices, and the like.

Figure 1 shows an exemplary configuration of an authorized client 24 implemented as, for example, a broadcast-enabled computer. In an embodiment, the client 24 is a portable handheld computing device having a housing 25 encasing or otherwise coupled to the components of client 24 described below herein. Client 24 includes a central processing unit (CPU) 60 having a processor 62, volatile memory 64 (*e*.*g*., RAM), and program memory 66 (*e*.*g*., ROM, Flash, disk drive, floppy disk drive, CD-ROM, *etc*.). The client 24 may have one or more input devices 68 (*e*.*g*., keyboard, mouse, *etc.*), a computer display 70 (*e*.*g*., VGA, SVGA, LCD), and a stereo I/O 72 for interfacing with a stereo system.

The client 24 includes a digital and/or analog broadcast transceiver 74 (*e*.*g*., antenna satellite dish receiver, RF receiver, microwave receiver, multicast listener, *etc*.) and a tuner 76 which tunes to appropriate frequencies or addresses of the broadcast network. The tuner 76 is configured to receive digital and/or analog broadcast data in a particularized format, such as MPEG-encoded digital video and audio data, as well as digital data in many different forms, including software programs and programming information in the form of data files. The client 24 also has a modem 78 which provides dial-up access to the data network 28 to provide a back channel or direct link to the content servers 22. In other implementations of a back channel, the modem 78 might be replaced by a network card, or an RF receiver, or other type of port/receiver which provides access to the back channel.

The client 24 runs an operating system which supports multiple applications. The operating system is preferably a multitasking operating system which allows simultaneous execution of multiple applications. The operating system may employ a graphical user interface windowing environment which presents the applications or documents in specially delineated areas of the display screen called "windows."

The client 24 is illustrated with a key listener 80 to receive the authorization and session keys transmitted from a server or other electronic device. The keys received by listener 80 are used by the cryptographic security services implemented at the client to enable decryption of the session keys and data. Cryptographic services are implemented through a combination of hardware and software. A secure, tamper-resistant hardware unit 82 is provided external to the CPU 60 and two software layers 84, 86 executing on the processor 62 are used to facilitate access to the resources on the cryptographic hardware 82.

The software layers include a cryptographic application program interface (CAPI) 84 which provides functionality to any application seeking cryptographic services (e.g., encryption, decryption, signing, or verification). One or more cryptographic service providers (CSPs) 86 implement the functionality presented by the CAPI to the application. The CAPI layer 84 selects the appropriate CSP for performing the requested cryptographic function. The CSPs 86 perform various cryptographic functions such as encryption key management, encryption/decryption services, hashing routines, digital signing, and authentication tasks in conjunction with the cryptographic unit 82. A different CSP might be configured to handle specific functions, such as encryption, decryption, signing, etc., although a single CSP can be implemented to handle them all. The CSPs 86 can be implemented as dynamic linked libraries (DLLs) that are loaded on demand by the CAPI, and which can then be called by an application through the CAPI 84.

It should be recognized that the client 24 may include fewer than all of the components illustrated in and discussed with reference to Figure 1. Additionally, the client 24 may include components additional to the components illustrated in and discussed with reference to Figure 1, such as any or all components associated with, for example, personal computers known in the art.

As earlier alluded to, client 24 typically includes at least some form of computer readable media. Computer readable media can be any available media that can be accessed by processing unit 60. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by processing unit 60. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

An embodiment of the invention is operable to supply a ground user with information on aircraft position and heading to determine if current aircraft approach is toward an intended target as well as to provide tactical air traffic control capabilities. Knowledge of weapons payload is used to determine appropriate munitions for each target to include intentional and collateral damages effects.

An embodiment of the invention provides a ground user a portable interface that displays aircraft and weapon data. Aircraft position and heading for multiple aircraft is determined by the respective aircraft onboard systems and passed via a datalink, for example. From these onboard systems, an embodiment can extract an estimate of time available for station keeping, time to target, weapons payload status of each aircraft, and call sign. An embodiment also provides the ground user with notification that the aircraft is on final approach to the target (commonly called "wings level").

The ground user's interface integrates the information from the aircraft with a terrain database into a coherent 3-D real-time representation of the airspace. This provides to the ground user a realistic representation of available resources and eliminates the need to maintain the information on paper or mentally. When available, location of the ground unit and all other units in the area of operations is also displayed. From the weapons payload information, ground users may select and plot blast radii of various munitions to estimate effects. The system also records the target locations and munitions deployed for future battle damage assessment.

An embodiment takes aircraft information from various onboard aircraft systems and sends it to the ground user via RF datalink. The ground device takes the aircraft data, terrain database, and locations of other units in area of operations and builds a 3-D representation. This image may be manipulated (pan/zoom/rotate) by the user to optimize the presentation of the data within the image. Data associated with each object can be presented at the user's request (*e*.*g*. call sign, location, heading, altitude, *etc*).

Based upon weapon selected and target location, a representation of expected battle damage can be overlayed on the display. Battle damage effects are based upon previously established weapons characteristics. This allows the ground user to conduct real-time trade-offs between intentional and collateral damage effects.

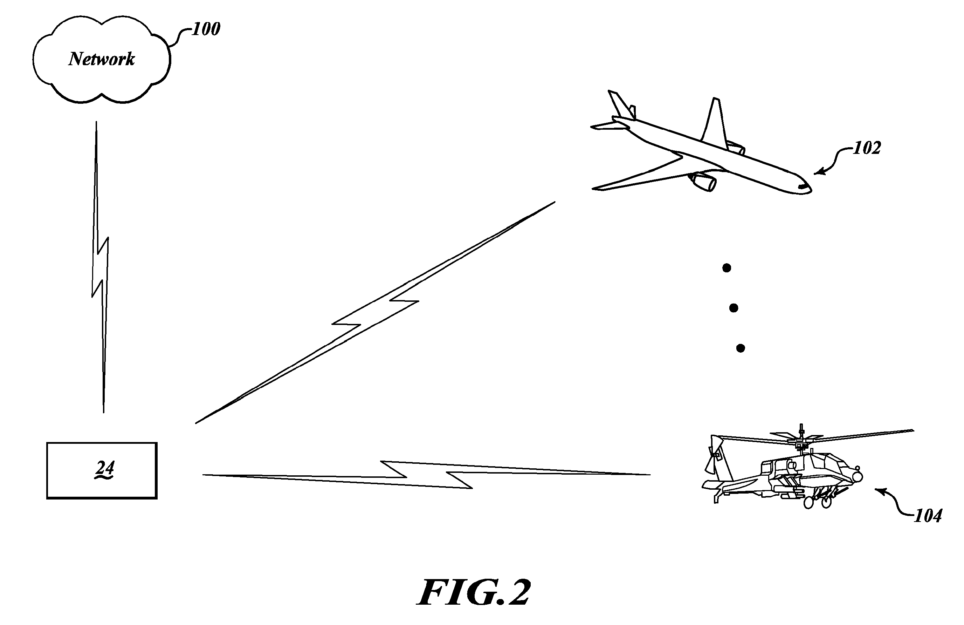

Referring to Figure 2, and in an embodiment, the transceiver 74 of client 24 is configured to communicate (via, *e*.*g*., satellite, cellular tower, *etc*.) with a network 100, such as the Internet. The transceiver 74 is further configured to communicate with onboard systems associated with multiple vehicles such as, for example, aircraft 102, 104. Although only two such aircraft 102, 104 are illustrated in Figure 2, it is to be appreciated that more or fewer such aircraft can be serially or simultaneously in communication with the transceiver 74.

As above alluded to, the transceiver 74 can receive from onboard systems associated with aircraft 102, 104 data characterizing the position and orientation (*e*.*g*., heading) of the aircraft 102, 104. Such data may be provided to the transceiver 74 through a datalink , such as Link 16 or thru a modified ADS-B beacon. Information characterizing weapon payload carried by the aircraft 102, 104 may also be communicated to the transceiver 74 via the datalink. Alternatively, the transceiver 74 may receive some or all of the aircraft position, heading and payload information via network 100.

In an embodiment, the transceiver 74 may further communicate with one or more satellites (not shown) to enable the CPU 60 to determine the position of the client 24. Additionally, the client 24 may receive via transceiver 74, or otherwise have stored in memory 64, 66 a terrain database that enables the CPU 60, using executable instructions according to an embodiment, to generate to display 70 a three-dimensional (3-D) depiction of a selected terrestrial region, as well as a depiction of the location of the client 24 plotted with respect to a depicted terrestrial region.

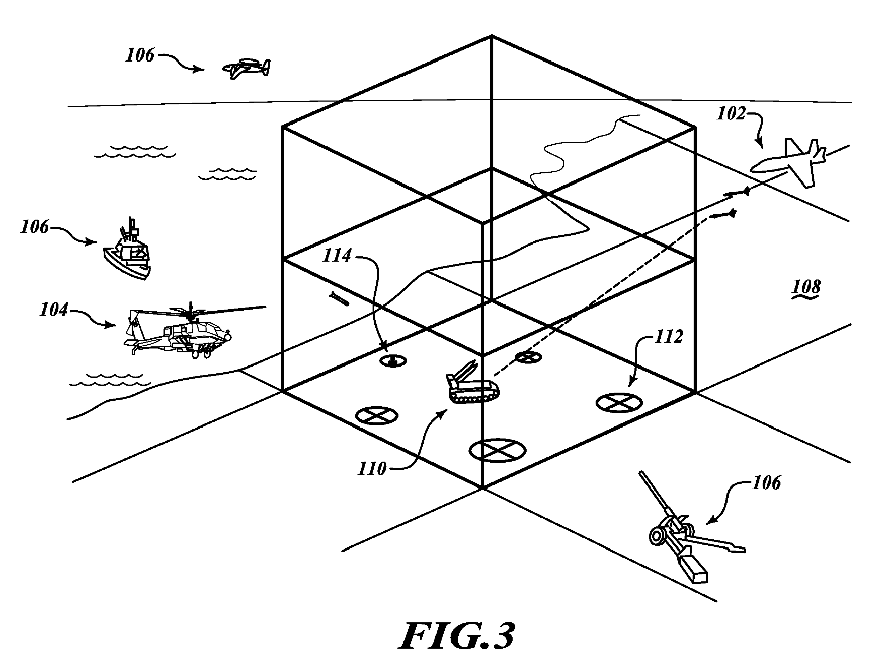

Referring now to Figure 3, an embodiment includes executable instructions that can enable the CPU 60 to use the data received from or regarding the aircraft 102, 104 to generate to the display 70 a 3-D rendering of the position and orientation of the aircraft 102, 104, as well as any other airborne, seaborne or terrestrial assets 106 in the vicinity of a depicted terrestrial region 108. Such display may further include numerical indications (now shown) of the latitude, longitude, altitude and heading of each depicted munitions-carrying asset. Such display provides a user of the client 24 with a heightened awareness of the battlespace in which the assets are engaged.

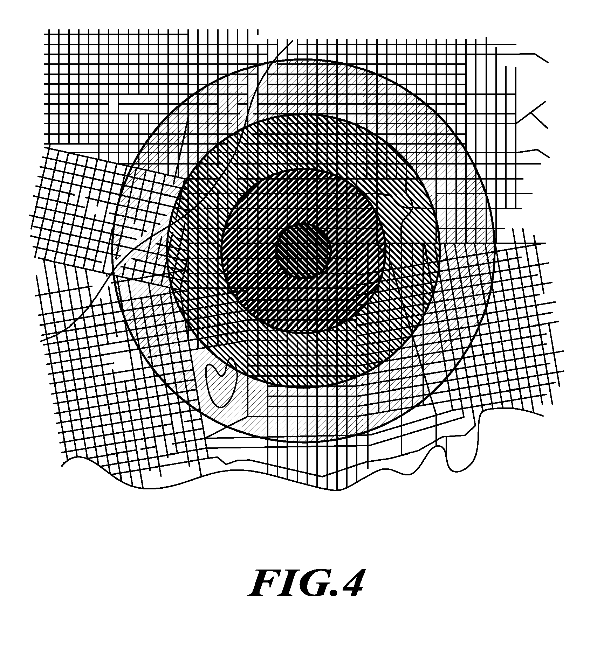

An embodiment includes further executable instructions that can enable the CPU 60 to use the terrain database to plot a target location 110 on the depicted terrain, as well as one or more areas 112 in which munitions should not be deployed, and one or more areas 114 in which no collateral damage resulting from deployed munitions should occur. The instructions further enable the CPU 60 to use the payload information associated with each asset to determine and generate to the display 70 a predicted weapon blast radius 150, as illustrated in Figure 4, plotted to show potential collateral damage effects. As such, a user of the client 24 is enabled to select one or more assets to deliver munitions to the target while minimizing the probability of undesired collateral damage effects. Subsequently, the client 24 can be used to transmit instructions based on such determinations to one or more of the assets.

In an embodiment, information received and calculations based on such information generated by the client 24 can be transmitted to other similar clients to enable deconflicting of available close air support resources.

As a result of the capabilities of a client 24 according to an embodiment, the following advantages may be realized:

- Provides JTAC's current position and terrain database on a handheld device. Plot aircraft position vector and weapons payload thru datalink (Link 16 and/or ADS-B beacon). Pass position information to aircraft as an air-to-ground Identification Friend Foe ( IFF) system.

- Provides a means to select munitions and plot blast radius on handheld so JTAC understands effect on target as well as potential collateral damage. This may have previously been determined by the pilot.

- Provides an electronic means to track close air support aircraft and build sortie 'stack.'

- Reduce the number of dry runs or provide an electronic 'wings level' by understanding aircraft position and orientation no matter what altitude.

- As much as or more than 4x reduction in time from targeting to bombs on target.

- Locate and track position and orientation of 16+ aircraft in real-time.

- Download and update weapons payload information as munitions expenditure is occurring for 16+ aircraft.

- Deconflict between multiple JTACs on available CAS assets in seconds.

While a preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. A system (24), comprising:
a signal interface (74) configured to receive first data from at least one onboard system of at least one aircraft;
a display (70); and
a processing device (60) configured to:
render to the display a graphical representation of a target location,
determine from the first data and render to the display a graphical illustration of a position of the at least one aircraft, and
determine, from information describing munitions carried by the at least one aircraft, and render to the display a graphical illustration of a blast radius associated with munitions deliverable by the at least one aircraft to the target location.

2. The system (24) of claim 1 further comprising a portable handheld housing (25) carrying the signal interface (74), display (70) and processing device (60).

3. The system (24) of claim 1 wherein the processing device (60) is further configured to determine from the first data and render to the display (70) a graphical illustration of a heading of the at least one aircraft.

4. The system (24) of claim 1 wherein the munitions information is received by the signal interface (74) from the at least one onboard system.

5. The system (24) of claim 1, further comprising a memory device (64, 66) on which is stored a database including second data characterizing the terrain on which the target location is positioned.

6. The system (24) of claim 5 wherein the processing device (60) is further configured to render to the display (70) a three-dimensional representation of the at least one aircraft and airspace proximal to the target location using the first and second data.

7. The system (24) of claim 1 wherein the processing device (60) is further configured to render to the display (70) an identification of a location of the system.

8. The system (24) of claim 5 wherein the processing device (60) is further configured to store to the memory device (64, 66) information characterizing munitions actually delivered to the target location.

9. The system (24) of claim 1 wherein the processing device (60) is further configured to transmit third data to the at least one aircraft via the signal interface (74).

10. A computer-readable medium having stored thereon instructions that, when executed by an electronic device (60) coupled to a signal interface (74) and a display (70), enable the electronic device to:
render to the display a graphical representation of a target location;
determine, from first data received by the signal interface from at least one onboard system of at least one aircraft, a position of the at least one aircraft;
render to the display a graphical illustration of the position of the at least one aircraft;
determine, from information describing munitions carried by the at least one aircraft, a blast radius associated with munitions deliverable by the at least one aircraft to the target location; and
render to the display a graphical illustration of the blast radius.
